# EUROPÄISCHE PATENTSCHRIFT

(11) **EP 2 521 856 B1**
(45) Veröffentlichungstag und Bekanntmachung des Hinweises auf die Patenterteilung: **01.10.2014**
(21) Anmeldenummer: 11706472.5
(22) Anmeldetag: 22.02.2011
(51) Int. Cl.: F03B 17/06

(54) **STRÖMUNGSKRAFTWERK UND VERFAHREN ZU DESSEN BETRIEB**
TIDAL POWER PLANT AND METHOD FOR OPERATING SAID TIDAL POWER PLANT
CENTRALE HYDROMOTRICE ET PROCÉDÉ POUR LA FAIRE FONCTIONNER

(30) Priorität: 16.04.2010 DE 102010015534
(43) Veröffentlichungstag der Anmeldung: 14.11.2012
(73) Patentinhaber: Voith Patent GmbH, 89522 Heidenheim (DE)
(72) Erfinder: ARLITT, Raphael, 89077 Ulm (DE); BISKUP, Frank, 73527 Schwäbisch Gmünd (DE); WEILEPP, Jochen, 89518 Heidenheim (DE)
(74) Vertreter: Dr. Weitzel & Partner
(86) Internationale Anmeldenummer: PCT/EP2011/000842
(87) Internationale Veröffentlichungsnummer: WO 2011/141074

(56) Entgegenhaltungen:
- WO-A1-2009/062262
- WO-A1-2009/076726
- DE-A1-102008 023 050
- GB-A- 1 473 746
- GB-A- 2 461 265

## Beschreibung

Die Erfindung betrifft ein Strömungskraftwerk, insbesondere zur Energiegewinnung aus einer Gezeitenströmung, sowie ein Verfahren zu dessen Betrieb.

Ohne Dammstrukturen, freistehend in einer Umgebungsströmung arbeitende Strömungskraftwerke sind besonders zur Energiegewinnung aus einer Gezeitenströmung geeignet. Alternativ besteht die Möglichkeit eines Einsatzes in einem Fließgewässer, etwa zur Stromerzeugung an teilweise zurückgebauten Staustufen. Dabei umfassen gattungsgemäße Strömungskraftwerke eine Wasserturbine in Form eines Rotors, der an einer schwimmenden oder sich gegen den Gewässergrund mittels eines Tragwerks abstützenden Maschinengondel umläuft.

Die freistehende Anlagenkonzeption erlaubt den Aufbau von Gezeitenenergieparks auch an Standorten, die für den Bau umfangreicher Sperrwerke ungeeignet wären. Allerdings müssen derartige Anlagen ohne eine bauliche Vorrichtung für einen trockenfallenden Servicezugang für möglichst lange Wartungsintervalle ausgelegt sein. Des Weiteren ist für den Einsatz im Meer eine möglichst robuste Anlage vorzusehen, um Belastungsspitzen bei stürmischen Wetterbedingungen standzuhalten.

Ferner müssen Vorkehrungen getroffen werden, um eine Anlage jederzeit sicher anzuhalten und den Anlagenstillstand sichern zu können. Dies ist beispielsweise dann notwendig, wenn die Maschinengondel mit der Wasserturbine zur Ausführung einer Wartung geborgen werden muss. Als eine Lösung wurde vorgeschlagen, die Rotorblätter der Wasserturbine drehbar an einer Nabe zu befestigen und für das Abbremsen der Anlage die Rotorblätter in die Fahnenstellung zu drehen. Zusätzlich werden gattungsgemäße Anlagen typischerweise mit einer Feststellbremse versehen, um unter allen Umständen die Ausführbarkeit eines Rotorstopps sicherstellen zu können.

Zwar verbessern drehbar angelenkte Rotorblätter das Anlaufverhalten der Wasserturbine, sie führen allerdings zu einer aufwendigen Konstruktion. Dies ist wiederum mit einer erhöhten Ausfallwahrscheinlichkeit der Anlage verbunden. Auch Feststellbremsen für die Wasserturbine oder für weitere Komponenten der umlaufenden Einheit stellen zusätzliche, die Komplexität der Anlage vergrößernde Komponenten dar, für die Ansteuerungen bzw. Energieversorgungssysteme bereitzustellen sind. Dabei ist insbesondere für einen Bremsmechanismus, der nur zeitweilig aktiviert wird, die Problematik maritimen Bewuchses oder der Korrosion insbesondere in einer Salzwasserumgebung gegeben.

Der Erfindung liegt die Aufgabe zugrunde, die voranstehend genannten Nachteile des Stands der Technik zu überwinden und ein Strömungskraftwerk, insbesondere ein Gezeitenkraftwerk, und ein Verfahren für dessen Betrieb anzugeben, das für eine konstruktiv vereinfachte Anlage ein sicheres Stillsetzen der Wasserturbine gewährleistet.

Die der Erfindung zugrunde liegende Aufgabe wird durch die Merkmale der unabhängigen Ansprüche gelöst. Vorteilhafte Ausgestaltungen ergeben sich aus den Unteransprüchen.

Dabei geht die Erfindung von einer Wasserturbine für ein gattungsgemäßes, freistehendes Strömungskraftwerk aus, die in Form eines Rotors mit drehstarren Rotorblättern ausgebildet ist. Dafür sind unterschiedliche Ausgestaltungen denkbar, etwa eine Befestigung der Rotorblätter an einer Nabe, wobei die Rotorblätter sich nach radial außen erstrecken. Dies schließt die Möglichkeit einer Pfeilung der Rotorblätter in Vorwärts- oder Rückwärtsrichtung ein. Als Ausgestaltungsalternative sind ein äußerer Tragring und radial nach innen gerichtete Rotorblätter denkbar. Des Weiteren ist der Rotor mit einem Antriebsstrang verbunden, der wenigstens mittelbar einen elektrischen Generator antreibt. Besonders bevorzugt wird ein Direktantrieb mit einer drehzahlstarren Kopplung der Wasserturbine und des Generatorläufers. Alternativ kann der elektrische Generator mittelbar über ein mechanisches oder hydrodynamisches Getriebe mit der Wasserturbine verbunden sein oder es erfolgt eine indirekte Kraftübertragung mittels eines zwischengeschalteten hydraulischen Kreislaufs.

Dokument GB 2461265 offenbart eine Wasserturbine gemäß dem Oberbegriff des Anspruchs 1.

Für das sichere Stillsetzen ist die Wasserturbine einer erfindungsgemäßen Anlage über einen weiten Betriebsbereich nicht selbstanlaufend ausgelegt, wobei die Selbstanlaufhemmung für Schnelllaufzahlen λ unterhalb einer konstruktiv festgelegten Selbstanlauf-Schnelllaufzahl λA_{S} mit λ_{S} ≥ 1 auftritt. Dabei ist die Schnelllaufzahl λ als das Verhältnis der Umlaufgeschwindigkeit *u*, d.h. der Tangentialgeschwindigkeit an den Rotorblattspitzen der Wasserturbine, relativ zur Anströmungsgeschwindigkeit *v* definiert (λ = *u*/*v),* wobei für die Anströmungsgeschwindigkeit von einer über die Rotorfläche energetisch gemittelten Geschwindigkeit der Umgebungsströmung ausgegangen wird.

Die Selbstanlauf-Schnelllaufzahl λ_{S} ist vorliegend als die höchste Schnelllaufzahl λ definiert, für die bei einer Anströmungsgeschwindigkeit *v* bis zu einer festgelegten, am gewählten Standort theoretisch zu erwartenden Maximal-Anströmungsgeschwindigkeit *V*ₘₐₓ, für die die Anlage ausgelegt ist, die Summe der bremsenden Kräfte in den Lagern der Wasserturbine und der weiteren umlaufenden Komponenten im Antriebsstrang größer ist als das von der Wasserturbine erzeugte Antriebsmoment. Dabei bleibt das im elektrischen Generator erzeugte elektromagnetische Moment unberücksichtigt.

Besonders bevorzugt wird eine noch höhere Sicherheitsreserve zum Stillsetzen einer erfindungsgemäßen Anlage mit einer Festlegung für die Selbstanlauf-Schnelllaufzahl λ_{S} mit λ_{S} ≥ 1,5 und besonders bevorzugt λ_{S} ≥ 2. Die voranstehend genannten Untergrenzen für die Selbstanlauf-Schnelllaufzahl λ_{S} beziehen sich auf eine Anlage, die für eine Schnelllaufzahl λ im Bereich von 3 ≤ λ ≤ 6 leistungsoptimal geführt ist. Für eine hiervon abweichende Anlagenauslegung wird die erfindungsgemäß gewählte Untergrenze für die Selbstanlauf-Schnelllaufzahl λ_{S} ausgehend von einer zugeordneten, leistungsoptimalen Schnelllaufzahl λₒₚₜ durch eine Untergrenze mit λ_{S} ≥ λₒₚₜ/6, bevorzugt λ_{S} ≥ λₒₚₜ/3 und besonders bevorzugt λ_{S} ≥ λₒₚₜ/2 festlegt.

Erfindungsgemäß ist die Wasserturbine so gestaltet, dass im Bereich kleiner Schnelllaufzahlen λ bis zu einer Null-Durchgangs-Schnelllaufzahl λ₀ negative Leistungsbeiwerte *C*ₚ vorliegen. Zur Festlegung der Selbstanlauf-Schnelllaufzahl λ_{S} werden Lagerverluste im Antriebsstrang berücksichtigt, entsprechend ist λ_{S} etwas größer als λ₀. Für eine besonders vorteilhafte Ausgestaltung der Erfindung ist die Wasserturbine so gestaltet, dass für die Null-Durchgangs-Schnelllaufzahl λ₀ die Bedingung λ₀ ≥ 1 und besonders bevorzugt λ₀ ≥ 1,5 erfüllt ist.

Ein erfindungsgemäßes Strömungskraftwerk muss beim Anfahren mittels des motorisch betriebenen elektrischen Generators einen weiten Schnelllaufzahlbereich bis zur Selbstanlauf-Schnelllaufzahl λ_{S} durchfahren bis die Anlage ausschließlich durch das antreibende Moment der Wasserturbine selbst beschleunigt und bis in den leistungsoptimalen Betriebsbereich fährt. Der ausgedehnte Umlaufgeschwindigkeitsbereich ohne Selbstanlauf stellt demnach sicher, dass auch für die am gewählten Standort zu berücksichtigende Maximal-Anströmungsgeschwindigkeit *V*ₘₐₓ die Wasserturbine nicht unkontrolliert anläuft. Es ist demnach nicht notwendig, eine separate Bremse zum Festsetzen der Wasserturbine zu verwenden, wodurch ein konstruktiv vereinfachtes Anlagenkonzept resultiert.

Für den Fall, dass eine im Betrieb befindliche Anlage stillgesetzt werden soll, wird der Bremsvorgang dadurch eingeleitet, dass die Umlaufgeschwindigkeit *u* der Wasserturbine verlangsamt wird und die Schnelllaufzahl λ unter die vorbestimmte Selbstanlauf-Schnelllaufzahl λ_{S} sinkt. Hierzu kann ein für einen kurzzeitigen Betrieb konzipiertes Bremssystem verwendet werden. Eine andere Möglichkeit besteht darin, das Bremsmoment über eine Vergrößerung des vom elektrischen Generator erzeugten Generatormoments zu bewirken. Zusätzlich oder alternativ wird die gewünschte Verlangsamung der Umlaufgeschwindigkeit *u* durch ein kurzfristiges Erhöhen der bremsenden Lagermomente im Antriebsstrang bewirkt. Hierfür kommt im Falle eines Einsatzes von Gleitlagern für die Wasserturbine eine Veränderung der Lagercharakteristik durch einen Eingriff in den Lagerspalt in Frage. Dabei müssen die für das Bremsen ergriffenen Maßnahmen nicht dauerhaft wirken. Sie dienen lediglich dazu, die Schnelllaufzahl λ der Wasserturbine unter die vorgegebene Selbstanlauf-Schnelllaufzahl λ_{S} zu bringen. Die weitere Bremsphase bis zum endgültigen Stillstand ergibt sich dann automatisch aufgrund der Nicht-Selbstanlaufcharakteristik der Wasserturbine.

Besonders bevorzugt wird eine rotorförmig ausgebildete Wasserturbine verwendet, deren Rotorblätter bezüglich des Einbauwinkel- und des Profilverlaufs so gestaltet sind, dass die erfindungsgemäße Festlegung für die Selbstanlauf-Schnelllaufzahl λ_{S} mit λ_{S} ≥ 1 erzielt wird. Dabei wird für eine bevorzugte Ausgestaltung der Erfindung wenigstens ein lokal begrenzter Teilabschnitt der Längserstreckung der Rotorblätter zur Sicherstellung der ausgedehnten Selbstanlaufhemmung ausgelegt. Hierfür kommen insbesondere die im Langsamlauf stärker gewichteten, radial inneren Abschnitte in Frage, während radial äußere Abschnitte insbesondere für einen vorteilhaften Schnelllauf im Bereich der optimalen Schnelllaufzahlen λₒₚₜ ausgelegt werden. Neben dem ersten Radialabschnitt des Rotorblatts zur Anpassung im Bereich kleiner Schnelllaufzahlen mit λ ≤ λ_{S} liegt demnach wenigstens ein zweiter Radialabschnitt vor, für den der Profilverlauf und der Einbauwinkel zur Erzielung eines möglichst hohen Wirkungsgrads im Bereich λ > λ_{S} gewählt sind.

Für eine Weitergestaltung der Erfindung wird die ausgedehnte Selbstanlaufhemmung der Wasserturbine mit einer bidirektionalen Anströmungscharakteristik kombiniert. Hierzu werden insbesondere punktsymmetrische Profile mit Wölbung, demnach Profile mit einer S-Schlagförmigen Skelettlinie verwendet. Diese können vorteilhaft so gewählt sein, dass im Langsamlauf mit λ ≤ λ₀ die gewünschten negativen Leistungsbeiwerte Cₚ ≤ 0 resultieren und Schnelllaufzahlen λ im Betriebsbereich um λₒₚₜ für eine Anströmung aus zwei entgegengesetzt gerichteten Hauptanströmungsrichtungen zu einem akzeptablen Wirkungsgrad führen.

Nachfolgend wird die Erfindung anhand von Ausführungsbeispielen und in Verbindung mit Figurendarstellungen genauer erläutert. In diesen ist im Einzelnen Folgendes dargestellt:
- Figur 1: zeigt einen charakteristischen Verlauf des Leistungsbeiwerts *C*ₚ in Abhängigkeit der Schnelllaufzahl λ für ein erfindungsgemäßes Strömungskraftwerk.
- Figur 2: zeigt für eine Anlage mit einer Leistungsbeiwert-Charakteristik gemäß Figur 1 die von der Wasserturbine erzeugte Antriebsleistung *P* in Abhängigkeit der Anströmungsgeschwindigkeit *V* für unterschiedlich gewählte Schnelllaufzahlen λ sowie die geschwindigkeitsabhängige, bremsende Verlustleistung *P*ᵣ in den Lagern.
- Figur 3: zeigt eine Ausführungsvariante der Erfindung mit einer lokal begrenzten Anpassung der Rotorblätter der Wasserturbine zur Realisierung einer ausgedehnten Selbstanlaufhemmung.
- Figur 4: zeigt den Verlauf des bereichsweise zugeordneten Leistungsbeiwerts für die in Figur 3 dargestellten Radialabschnitte der Wasserturbine.

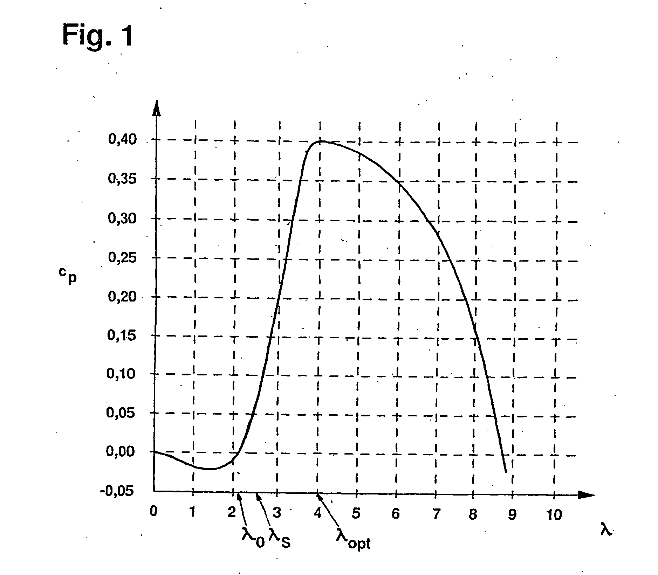

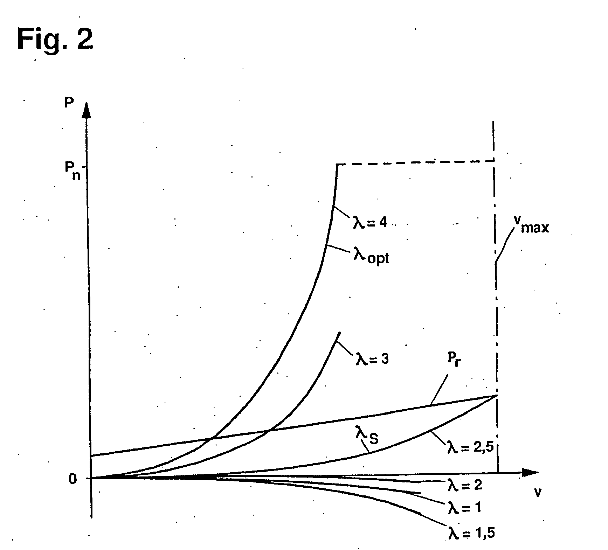

Figur 1 zeigt für ein bevorzugtes Ausführungsbeispiel der Erfindung den Verlauf des Leistungsbeiwerts *C*ₚ der Wasserturbine in Abhängigkeit der Schnelllaufzahl λ. Gewählt ist eine Anlagenauslegung mit einer leistungsoptimalen Schnelllaufzahl λₒₚₜ = 4. Zur Sicherstellung einer ausgedehnten Selbstanlaufhemmung ist die Wasserturbine so gestaltet, dass für kleine Schnelllaufzahlen λ der Leistungsbeiwert *Cₚ* kleiner als null ist. Der Bereich mit *C*ₚ ≤ 0 reicht bis zur Null-Durchgangs-Schnelllaufzahl λ₀, wobei λ₀ für das vorliegende bevorzugte Ausgestaltungsbeispiel mit λ₀ > 2 gewählt ist. Des Weiteren tritt bis zur Selbstanlauf-Schnelllaufzahl λ_{S}, die vorliegend mit λ_{S} > 2 gewählt ist, die Bedingung auf, dass für alle Anströmungsgeschwindigkeiten *v,* für die die Anlage ausgelegt ist, das auf die umlaufende Einheit wirkende, bremsende Moment größer ist als das von der Wasserturbine erzeugte antreibende Moment. Dies wird nachfolgend anhand von Figur 2 verdeutlicht. Dargestellt ist die von der Wasserturbine erzeugte Antriebsleistung *P* in Abhängigkeit der Anströmungsgeschwindigkeit *v*. Dabei ist für eine leistungsoptimale Schnelllaufzahl λₒₚₜ, die für das vorliegende Ausführungsbeispiel bei λ = 4 liegt, ein leistungsoptimaler Anlagenbetrieb gegeben. In diesem Bereich wird im Normalbetrieb die Anlage geführt, bis die Nennleistung *P*ₙ erreicht wird und eine Leistungsabregelung erfolgt. Zu diesem Zweck kann eine Leistungsbegrenzung durch den Betrieb im Schnelllaufbereich mit λ > λₒₚₜ ausgeführt werden.

Ferner zeigt Figur 2 den Verlauf der in den Lagern der umlaufenden Einheit erzeugten Verlustleistung *P*ᵣ, die mit zunehmender Anströmungsgeschwindigkeit *v* ansteigt. Dabei ist die Verlustleistung *P*ᵣ zur Verdeutlichung übertrieben dargestellt, da die typischerweise auftretenden Lagerverluste im Bereich von < 2 % bezogen auf die Nennleistung *P*ₙ liegen.

Für kleine Schnelllaufzahlen mit λ ≤ 2 liegen für die bevorzugte Ausgestaltung gemäß Figur 1 negative Leistungsbeiwerte *C*ₚ vor. Der Bereich der Selbstanlaufhemmung reicht für das vorliegende Ausführungsbeispiel unter Annahme einer zur Verdeutlichung übertrieben dargestellten Verlustleistung *P*ᵣ bis zu einer Schnelllaufzahl von λ = 2,5, die der Selbstanlauf-Schnelllaufzahl λ_{S} entspricht. Für diese gilt, dass für alle Anströmungsgeschwindigkeiten *v* unterhalb der theoretisch zu erwartenden Maximal-Anströmungsgeschwindigkeit *v*ₘₐₓ die Bedingung erfüllt ist, dass die von der Wasserturbine erzeugte Antriebsleistung *P* nicht größer als die Verlustleistung *P*ᵣ in den Lagern ist.

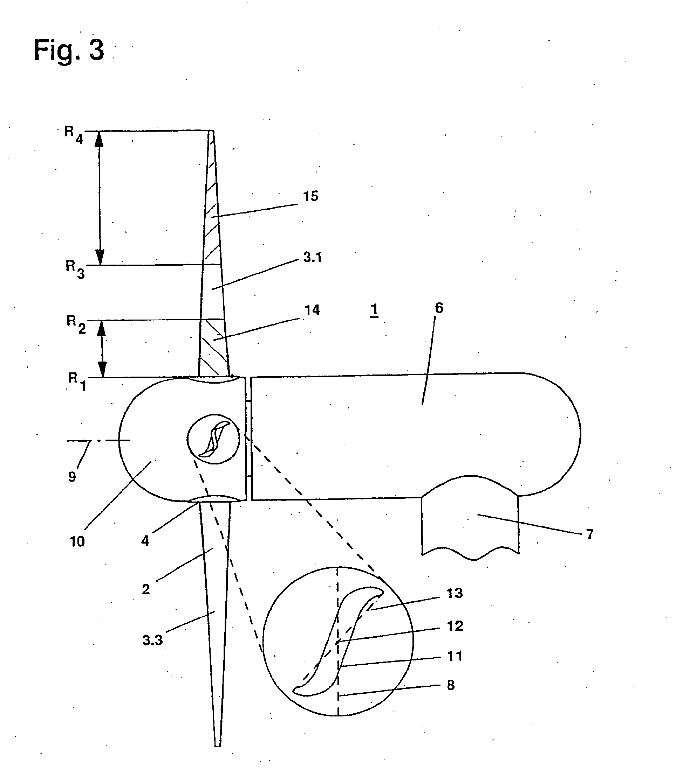

Figur 3 zeigt schematisch vereinfacht ein erfindungsgemäßes Gezeitenkraftwerk 1. Dies umfasst eine Wasserturbine 2 mit drehstarr an einer Nabe 4 befestigten Rotorblättern 3.1, 3.2, 3.3, die für die dargestellte Ausgestaltung im Wesentlichen nach radial außen weisen. An die Nabe 4 schließt eine Antriebswelle 5 an. Die weiteren Komponenten der umlaufenden Einheit 10 sowie die zugeordneten Lagerkomponenten und der elektrische Generator sind im Einzelnen nicht dargestellt. Diese werden typischerweise in der Maschinengondel 6 aufgenommen, die auf einer Stützstruktur 7 ruht.

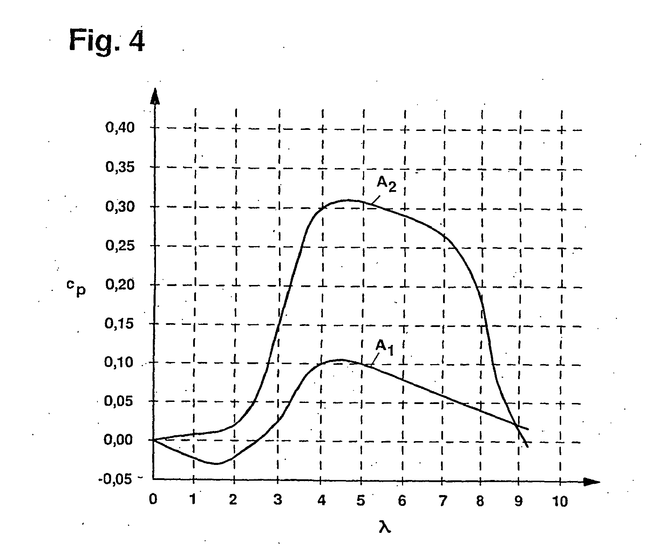

Für die in Figur 3 dargestellte Ausführungsvariante der Erfindung sind die radial inneren Bereiche der Rotorblätter 3.1, 3.2, 3.3 für die erfindungsgemäß gewählte Anlaufhemmung verantwortlich. Hierzu wird ein erster Radialabschnitt 14 festgelegt, der, wie exemplarisch für das Rotorblatt 3.1 dargestellt, von einem ersten Radius *R*₁ bis zu einem größeren zweiten Radius *R*₂ reicht. Für einen zweiten Radialabschnitt 15, der vom dritten Radius *R*₃ mit *R*₃ > *R*₂ bis zu einem größeren, vierten Radius *R*₄ reicht, resultiert der wesentliche Beitrag zum Leistungsbeiwert *C*ₚ für Schnelllaufzahlen mit λ > λ_{S}. Die Beiträge des ersten Radialabschnitts 14 und des zweiten Radialabschnitts 15 zum Leistungsbeiwert *C*ₚ sind in Figur 4 skizziert. Dargestellt ist ein erster bereichsweise zugeordneter Leistungsbeiwert *A*₁, der dem ersten Radialabschnitt 14 zugeordnet ist. Dieser weist einen ausgeprägten Bereich mit negativen Leistungsbeiwerten *C*ₚ bis zu einer Schnelllaufzahl λ = 2,5 auf. Demnach bremst der erste Radialabschnitt 14 die Wasserturbine im Bereich kleiner Schnelllaufzahlen λ. In diesem Betriebsbereich reicht der positive Beitrag durch den zweiten bereichsweise zugeordneten Leistungsbeiwert *A*₂, der den Beitrag des zweiten Radialabschnitts 15 widerspiegelt, nicht aus, um einen Selbstanlauf der Wasserturbine zu bewirken. Der gesamte Leistungsbeiwert *C*ₚ wird für größere Schnelllaufzahlen λ im Wesentlichen durch den Verlauf des zweiten bereichsweise zugeordneten Leistungsbeiwerts *A*₂ bestimmt.

Figur 3 zeigt einen vergrößert dargestellten nabennahen Profilschnitt 11 für das Rotorblatt 3.2, der in den ersten Radialabschnitt 14 zwischen dem ersten Radius *R*₁ und dem zweiten Radius *R*₂ fällt. Das gewählte, bidirektional anströmbare Profil weist einen S-Schlag für die im Einzelnen nicht dargestellte Skelettlinie auf. Dabei ist das Profil punktsymmetrisch zum Symmetriepunkt 12. Durch die Wahl des Profil- und Einbauwinkelverlaufs kann die Leistungsbeiwertcharakteristik zur Sicherstellung der Selbstanlaufhemmung festgelegt werden. In Figur 3 ist die Winkelstellung der Profilsehne 13 zur Rotationsebene 8 skizziert dargestellt, wobei die Rotationsebene 8 durch die Rotationsachse 9 der umlaufenden Einheit 10 als Flächennormale und durch die Lage der Fußpunkte der Rotorblätter 3.1, 3.2, 3.3 an der Nabe 4 festgelegt ist. Dabei führt eine Verringerung des Einbauwinkels zu einer Profilcharakteristik, für die die Profilpolare im Anströmungswinkelbereich von 80°- 90° einen negativen Auftriebsbeiwert aufweist.

Weitere Ausführungsvarianten der Erfindung ergeben sich aus den nachfolgenden Schutzansprüchen.

### Bezugszeichenliste

- 1: Gezeitenkraftwerk
- 2: Wasserturbine
- 3.1, 3.2, 3.3: Rotorblätter
- 4: Nabe
- 5: Antriebswelle
- 6: Maschinengondel
- 7: Stützstruktur
- 8: Rotationsebene
- 9: Rotationsachse
- 10: umlaufende Einheit
- 11: Profilschnitt
- 12: Symmetriepunkt
- 13: Profilsehne
- 14: erster Radialabschnitt
- 15: zweiter Radialabschnitt
- A1: erster bereichsweise zugeordneter Leistungsbeiwert
- A2: zweiter bereichsweise zugeordneter Leistungsbeiwert
- *u*: Umlaufgeschwindigkeit
- *V*: Anströmungsgeschwindigkeit
- *V*ₘₐₓ: maximale Anströmungsgeschwindigkeit
- *C*ₚ: Leistungsbeiwert
- λ: Schnelllaufzahl
- λₒₚₜ: leistungsoptimale Schnelllaufzahl
- λ_{S}: Selbstanlauf-Schnelllaufzahl
- λ₀: Null-Durchgangs-Schnelllaufzahl
- *P*: Antriebsleistung
- *P*ₙ: Nennleistung
- *P*ᵣ: Verlustleistung

## Patentansprüche

1. Strömungskraftwerk, umfassend
1.1 eine Wasserturbine (2) mit drehstarren Rotorblättern (3.1, 3.2, 3.3);
1.2 einen mit der Wasserturbine (2) verbundenen Antriebsstrang, der wenigstens mittelbar einen elektrischen Generator antreibt;
**dadurch gekennzeichnet, dass**
1.3 bei Anströmungsgeschwindigkeiten *v,* für die das Strömungskraftwerk ausgelegt ist, die Wasserturbine (2) für Schnelllaufzahlen λ unterhalb einer vorbestimmten Selbstanlauf-Schnelllaufzahl λ_{S} mit λ_{S} ≥ 1 nicht selbstanlaufend ausgebildet ist; und
1.4 die Wasserturbine (2) bis zu einer Null-Durchgangs-Schnelllaufzahl λ₀, die kleiner als die Selbstanlauf-Schnelllaufzahl λ_{S} ist, einen negativen Leistungsbeiwert Cₚ aufweist.

2. Strömungskraftwerk nach Anspruch 1, **dadurch gekennzeichnet, dass** für die Selbstanlauf-Schnelllaufzahl λ_{S} ≥ 1,5 und bevorzugt λ_{S} ≥ 2 gilt.

3. Strömungskraftwerk nach einem der Ansprüche 1 oder 2, **dadurch gekennzeichnet, dass** ausgehend von einer leistungsoptimalen Schnelllaufzahl λₒₚₜ der Wasserturbine (2) für die Selbstanlauf-Schnelllaufzahl λ_{S} ≥ λₒₚₜ/6, bevorzugt λ_{S} ≥ λₒₚₜ/3 und besonders bevorzugt λ_{S} ≥ λₒₚₜ/2 gilt.

4. Strömungskraftwerk nach Anspruch 1, **dadurch gekennzeichnet, dass** für die Null-Durchgangs-Schnelllaufzahl λ₀ ≥ 1 und bevorzugt λ₀ ≥ 1,5 gilt.

5. Strömungskraftwerk nach einem der vorausgehenden Ansprüche, **dadurch gekennzeichnet, dass** die Rotorblätter (3.1, 3.2, 3.3) der Wasserturbine (2) jeweils einen ersten Radialabschnitt (14) und einen zweiten Radialabschnitt (15) umfassen, wobei der Profilverlauf und der Einbauwinkelverlauf für den ersten Radialabschnitt (14) an Schnelllaufzahlen λ unterhalb der Selbstanlauf-Schnelllaufzahl und für den zweiten Radialbschnitt (15) an Schnelllaufzahlen λ oberhalb der Selbstanlauf-Schnelllaufzahl λ_{S} angepasst sind.

6. Strömungskraftwerk nach einem der vorausgehenden Ansprüche, **dadurch gekennzeichnet, dass** die Wasserturbine (2) bidirektional anströmbar ist.

7. Strömungskraftwerk nach Anspruch 6, **dadurch gekennzeichnet, dass** die Rotorblätter (3.1, 3.2, 3.3) der Wasserturbine (2) wenigstens über einen Teil ihrer Radialerstreckung ein gewölbtes, punktsymmetrisches Profil aufweisen.

## Claims

1. Flow power plant, comprising
1.1 a water turbine (2) having torsionally rigid rotor blades (3.1, 3.2, 3.3);
1.2 a drive train connected to the water turbine (2), which at least indirectly drives an electric generator;
**characterized in that**
1.3 at inflow speeds v for which the flow power plant is designed, the water turbine (2) is configured to be non-auto-restarting for tip speed ratios λ below a predetermined auto-restart tip speed ratio λs where λs ≥ 1; and
1.4 the water turbine (2) has a negative power coefficient cp up to a zero-crossing tip speed ratio λ0, which is smaller than the auto-restart tip speed ratio λs.

2. The flow power plant according to claim 1, **characterized in that** for the auto-restart tip speed ratio it holds that λs ≥ 1.5 and preferably λs ≥ 2.

3. The flow power plant according to one of claims 1 or 2, **characterized in that** starting from a power-optimal tip speed ratio λopt of the water turbine (2), it holds for the auto-restart tip speed ratio that λs ≥ λopt/6, preferably λs ≥ λopt/3, and particularly preferably λs ≥ λopt/2.

4. The flow power plant according to claim 1, **characterized in that** for the zero-crossing tip speed ratio it holds that λ0 ≥ 1 and preferably λ0 ≥ 1.5.

5. The flow power plant according to one of the preceding claims, **characterized in that** the rotor blades (3.1, 3.2, 3.3) of the water turbine (2) each comprise a first radial section (14) and a second radial section (15), wherein the profile behaviour and the installation angle behaviour for the first radial section (14) is adapted to tip speed ratios λ below the auto-restart tip speed ratio λs and for the second radial section (15) is adapted to tip speed ratios λ above the auto-restart tip speed ratio λs.

6. The flow power plant according to one of the preceding claims, **characterized in that** flow can be provided to the water turbine (2) bidirectionally.

7. The flow power plant according to claim 6, **characterized in that** the turbine blades (3.1, 3.2, 3.3) of the water turbine (2) have a curved, point-symmetrical profile at least over a part of their radial extension.

## Revendications

1. Centrale marémotrice, comprenant
1.1 une turbine à eau (2) munie de pales de rotor solidaires en rotation (3.1, 3.2, 3.3) ;
1.2 un train d'entraînement relié à la turbine à eau (2), qui entraîne au moins indirectement un générateur électrique ;
caractérisée en ce
1.3. qu'en présence de vitesses d'écoulement v1 pour lesquelles la centrale marémotrice est conçue, la turbine à eau (2) n'est pas conçue pour une mise en marche automatique, pour des vitesses spécifiques λ inférieures à une vitesse spécifique de mise en marche automatique λs avec λs ≥ 1; et
1.4 la turbine à eau (2) présente un coefficient de puissance négatif cp jusqu'à une vitesse spécifique de passage par zéro λ*o*, qui est inférieure à la vitesse spécifique de mise en marche automatique λs,

2. Centrale marémotrice selon la revendication 1, **caractérisée en ce que** la vitesse spécifique de mise en marche automatique est λs ≥ 1,5 et de préférence λs ≥ 2.

3. Centrale marémotrice selon l'une des revendications 1 ou 2, **caractérisée en ce qu'**à partir d'une vitesse spécifique optimale en terme de puissance λopt de la turbine à eau (2), la vitesse spécifique de mise en marche automatique est λs ≥ λopt/6, de préférence λs ≥ λopt/3 et de préférence particulière λs ≥ λopt/2.

4. Centrale marémotrice selon la revendication 1, **caractérisée en ce que** la vitesse spécifique de passage par zéro est λ₀ ≥ 1 et de préférence λₒ ≥ 1,5.

5. Centrale marémotrice selon l'une des revendications précédentes, **caractérisée en ce que** les pales de rotor (3.1, 3.2, 3.3) de la turbine à eau (2) comprennent chacun une première section radiale (14) et une seconde section radiale (15), où le tracé du profil et le tracé angulaire d'origine sont adaptés pour la première section radiale (14) à des vitesses spécifiques λ inférieures à la vitesse spécifique de mise en marche automatique λs et pour la seconde section radiale (15) à des vitesses spécifiques λ supérieures à la vitesse spécifique de mise en marche automatique λs.

6. Centrale marémotrice selon l'une des revendications précédentes, **caractérisée en ce que** la turbine à eau (2) peut être entraînée par le courant dans les deux sens.

7. Centrale marémotrice selon la revendication 6, **caractérisée en ce que** les pales de rotor (3.1, 3.2, 3.3) de la turbine à eau (2) présentent un profil concave en symétrie point au moins sur une partie de son extension radiale.
